# EUROPEAN PATENT APPLICATION

(11) **EP 1 967 791 A2**
(43) Date of publication of application: **10.09.2008**
(21) Application number: 08396005.4
(22) Date of filing: 06.03.2008
(51) Int. Cl.: F23G 5/44, F23G 5/50, F23G 7/10, F23K 3/16, F23L 5/02, F23L 15/00

(54) **Burning method and a burner for solid fuel**

(30) Priority: 06.03.2007 FI 20070087 U
(71) Applicant: Oy Manacation AB, 27670 Mannila (FI)
(72) Inventor: Auranen, Asko, 20320 Turku (FI); Linden, Jorma, 20320 Turku (FI); Törmä, Jukka, 21360 Lieto (FI)
(74) Representative: Pirhonen, Kari Lennart

(57) **Abstract**

Method and device for burning solid fuel, such as pellets, chips or cereals, in a burner, the combustion chamber of which is supplied with solid fuel through a feed channel and with the air needed for the combustion through at least one air channel. A first portion of the air needed for the combustion of the solid fuel is fed directly into the burner's combustion chamber and a second portion of the air needed for the combustion is fed into the combustion chamber at least partly through the solid fuel feed channel. The feed channel has a control valve, which can be controlled manually or automatically.

## Description

### OBJECT OF THE INVENTION

The object of the invention is a method for burning solid fuel, such as pellets, chips or cereals in a burner, the combustion chamber of which is supplied with solid fuel through a feed channel and with the air needed for the combustion through at least one air channel.

### PRIOR ART

According to known prior art, a pellet, chip or cereal burner is located in a vacuum boiler, the combustion chamber of which has sufficient vacuum and a good draft. In these circumstances the combustion is controlled and the fuel to be burned in the boiler is supplied with a sufficient amount of combustion air. Vacuum and a good draft are created, for example, by a smokestack that is sufficiently high. A separate flue gas extractor can also be used, in particular when the required boiler output is near the nominal boiler output.

As fuel is fed in suitable doses into the combustion chamber of the solid fuel burner and the fuel feed channel is connected with the combustion chamber, the vacuum boiler arrangement is well-founded. In this case the vacuum in the boiler can serve to effectively prevent the hot combustion gases from flowing in the opposite direction, i.e. into the solid fuel feed channel. If the hot combustion gases enter the solid fuel feed channel, there is a risk that the fuel in the channel will ignite, causing a fire hazard.

Safety regulations require that the fuel feed channel of the above-mentioned boilers must always be provided with an overheating detector and a fire protection pipe. The overheating detector located in the fuel feed channel causes an alarm and/or stops the operation of the burner. The fire protection pipe, on the other hand, breaks when it is heated and in this way cuts the connection between the burner and the fuel storage.

Even though a solid fuel vacuum boiler usually works well, it has some drawbacks, too. If there is too much vacuum in the boiler and too much draft in the flue duct, this will result in a through-flow that cools the boiler down and substantially reduces the efficiency of the boiler. Due to the draft, the no-load power of the boiler is at the same time remarkably high, too, which further weakens the overall efficiency of the boiler.

As a result of the above-mentioned drawbacks of vacuum boilers, known oil burners are placed in pressurised boilers, in which the burner's fan creates a sufficient positive gauge pressure in the combustion chamber. As oil is fed into the burner under pressure as a fine spray through a nozzle, oil burners do not involve any risk of the fuel igniting in the feed channel, as may be the case in solid fuel burners.

Due to the better efficiency of pressurised boilers, attempts have been made to locate also solid fuel burners in a pressurised boiler. This has not been successful, though, as the pressure of the hot combustion gases easily advances in the opposite direction towards the solid fuel feed channel, thus causing a serious fire safety hazard.

As oil, which is considered to be a non-renewable fuel, becomes more expensive and its availability becomes more problematic, there is an increasing need to switch from oil to solid fuels, such as pellets, chips or cereals. Switching fuels has been slowed down by the fact that it requires the replacement of the boiler, which is an expensive operation. This has led to the need to convert existing oil-fired boilers to use solid, renewable fuels, which would substantially reduce the cost of the fuel switch. This has not been successful, though, as oil-fired boilers are pressurised boilers that are not as such suitable for burning solid fuel.

The problem with connecting a solid fuel burner to an old oil-fired boiler is that the boiler's counter-pressure is too high. This means that when combustion air is being blown into the combustion chamber, the air flow easily goes in the wrong direction, i.e. the direction from which solid fuel is fed into the burner. If the hot combustion gases of the burner get into the solid fuel feed pipe, there is a fire hazard. Even though no fire occurs, at least the heat-sensing safety device located in the feed pipe nevertheless stops the operation of the burner right away. This not only results in operational disturbances but also in a poor boiler output.

### PURPOSE OF THE INVENTION

The purpose of the invention is to provide a combustion method that gives a substantially better combustion efficiency than that achieved by known methods when burning solid fuel, such as pellets, chips or cereals. Furthermore, the purpose of the invention is to provide a combustion method that enables the combustion of solid fuel, such as pellets, chips or cereals, in pressurised boilers, such as oil-fired boilers.

### CHARACTERISTICS OF THE METHOD ACCORDING TO THE INVENTION

The method according to the invention is characterised in that a first portion of the air needed for the combustion of the solid fuel is fed directly into the burner's combustion chamber and that a second portion of the air needed for the combustion is fed into the combustion chamber at least partly through the solid fuel feed channel.

The method according to the invention makes it possible to use a solid fuel burner, such as a pellet burner, in boilers where a positive gauge pressure builds up in the combustion pipe and in the burner's combustion chamber during combustion. This is due to part of the combustion air being blown through the solid fuel feed channel. As the solid fuel feed system prevents the air supplied to the feed channel from flowing towards the solid fuel tank, the air can only flow towards the burner's combustion chamber. This creates, in the feed channel, a positive gauge pressure that is sufficient to prevent the hot combustion gases of the combustion chamber from flowing in the wrong direction, i.e. into the fuel feed channel. Preventing the feed channel from getting hot increases the fire safety of the burner. At the same time the reliability of operation of the burner increases, as the hot combustion gases cannot affect the overheating detector located in the feed channel, which stops the operation of the burner when the temperature rises too high.

The method according to the invention also makes it possible to increase the draft resistance of any boiler, thereby improving the boiler's efficiency. The use of a pressurised boiler provides a solid fuel combustion method with a substantially better efficiency than that of known vacuum boilers.

The method according to the invention also makes it possible to convert existing oil-fired boilers to pellet-fired boilers in a cost-effective manner. With pellet firing, the output of a pressurised boiler is equal to that with oil firing. The no-load power of the boiler is also significantly lower, as the through-flow cooling the boiler is substantially reduced. A further advantage is that the possibility still exists to use an oil burner in the boiler, should this become necessary for some reason.

### EMBODIMENTS OF THE METHOD ACCORDING TO THE INVENTION

Part of the air needed for combustion can be introduced into the solid fuel feed channel in many different ways and to several alternative points in the feed channel. A preferred embodiment of the method according to the invention is characterised in that a first portion of the air needed for the combustion of the solid fuel is fed directly into the burner's combustion chamber to one or more points and that a second portion of the air needed for the combustion is fed to one or more points in the solid fuel feed channel.

According to the various embodiments of the invention
- the combustion air to be introduced through the solid fuel feed channel is fed into the fuel feed channel near the burner's combustion chamber and/or at a distance from the combustion chamber, or
- the combustion air is fed into the burner's combustion chamber by means of the burner's own fan in such a way that the air flow of the fan is divided into at least two portions, the first of which is fed directly into the burner's combustion chamber, and that the second portion is fed through the solid fuel feed channel.

In this case, a blow pipe is taken from the pressure chamber of the burner's own fan to the solid fuel discharge pipe in order to generate a positive gauge pressure in the burner's combustion pipe.

A fourth preferred embodiment of the method according to the invention is characterised in that the combustion air is fed into the burner's combustion chamber by means of two or more fans in such a way that the air flow from the burner's own fan is fed directly into the burner's combustion chamber and that the air flow of at least one separate fan is fed through the solid fuel feed channel.

A separate pressurised fan can be used instead of or in addition to the burner's own fan. According to the methods presented above, part of the air needed for combustion can be introduced into the solid fuel feed channel in many different ways and to several alternative points in the feed channel. The combustion air can thus be supplied by using the burner's own fan, dividing the air flow generated by this fan in a suitable manner. Alternatively, at least one separate fan can also be used in addition to the burner's own fan, feeding the air flow generated by this separate fan to the desired point in the solid fuel feed channel. Depending on the structure of the feed system, the most suitable point may be very near the combustion pipe or further away, even as far away as near the fuel tank. If a separate fan is used, safety devices must be provided to ensure that the sudden stopping or failure of this fan cannot cause the air to flow in the wrong direction and the heat of the combustion pipe to get into the fuel feed channel.

The air flow blown into the feed channel must not be too strong, however. Most preferably, the pressure in the feed channel is slightly higher than that in the boiler furnace. Excessive pressure in the feed channel and the air flow that it causes will interfere with combustion in the burner's combustion pipe. The proportion of the air flow portions that are blown directly into the combustion pipe and through the feed channel must also be correct. According to one embodiment, the flow of the combustion air blown into the feed channel is less than 50% of the flow of the air blown directly into the combustion pipe. Preferably, the air flow blown into the feed channel is 5-20% of the air flow blown into the combustion pipe, most preferably around 10%.

These air flow proportions can be set at suitable, fixed values when installing the burner, but this can also be done differently.

One embodiment of the invention is characterised in that
- the proportion of the quantity of combustion air to be supplied through the solid fuel feed channel to the quantity of combustion air to be supplied directly into the burner's combustion chamber is set at the desired value in advance or during the operation of the burner, or
- the quantity of combustion air to be supplied through the solid fuel feed channel is adjusted according to the temperature of the feed channel in such a way that the air quantity is increased as the feed channel temperature rises, or
- the quantity of combustion air to be supplied through the solid fuel feed channel is controlled according to the pressure of the boiler combustion chamber or the flue gas duct in such a way that the air quantity is increased as the pressure rises.

Combustion air control can be provided in such a way that temperature or pressure sensors control a valve which changes the quantity of air to be supplied into the solid fuel feed channel. The control can also be automated and provided with a suitable computer.

### DEVICE ACCORDING TO THE INVENTION

The invention also relates to a burner for solid fuel, such as pellets, chips or cereals, including
- a combustion chamber, such as a combustion pipe,
- a feed channel for feeding solid fuel into the combustion chamber,
- a combustion air supply device, such as a fan, and
- one or more apertures or channels for feeding combustion air from the fan into the combustion chamber.

### CHARACTERISTICS OF THE DEVICE ACCORDING TO THE INVENTION

The solid fuel burner according to the invention is characterised in that the solid fuel burner includes one or more feed channels, through which at least part of the combustion air can be introduced into the combustion chamber through the solid fuel feed channel.

### EMBODIMENTS OF THE DEVICE ACCORDING TO THE INVENTION

The preferred embodiments of the device according to the invention are characterised in that:
- the solid fuel burner includes one or more combustion air feed channels that open up into the solid fuel feed channel near the burner combustion chamber and/or at a distance from the combustion chamber, or that
- the solid fuel burner includes
   - the burner's own fan,
   - one or more feed channels for blowing combustion air from the burner's own fan into the burner's combustion chamber and
   - one or more feed channels for blowing combustion air from the burner's own fan into the solid fuel feed channel.

According to one embodiment, the solid fuel burner includes
- the burner's own fan,
- one or more feed channels for blowing combustion air from the burner's own fan into the burner's combustion chamber,
- one or more additional fans,
- feed channels connected to one or more additional fans for blowing combustion air from the additional fan into the solid fuel feed channel.

According to a further embodiment,
- the proportion of the quantity of combustion air to be supplied through the solid fuel feed channel to the quantity of combustion air to be supplied directly into the burner's combustion chamber is less than 50%, most preferably 5-20%, or
- the proportion of the quantity of combustion air to be supplied through the solid fuel feed channel to the quantity of combustion air to be supplied directly into the burner's combustion chamber is around 10%.

The preferred embodiments of the device according to the invention are characterised in that
- a control device, such as a valve, is provided in connection with the combustion air feed channel leading to the solid fuel feed channel, which control device controls the proportion of the quantity of combustion air to be supplied through the solid fuel feed channel to the quantity of combustion air to be supplied directly into the burner's combustion chamber, or
- the solid fuel burner includes a temperature detector that controls the quantity of combustion air to be supplied through the solid fuel feed channel according to the temperature of the solid fuel feed channel, or
- the solid fuel burner includes an air pressure detector that controls the quantity of combustion air to be supplied through the solid fuel feed channel according to the pressure of the boiler's combustion chamber or the flue gas duct.

In a fuel arrangement pressurised according to one embodiment of the invention, the pressure chamber of the burner's fan is connected by a blow pipe to the solid fuel discharge pipe. Thus, the positive gauge pressure that builds up during the operation of the fan is directed so that it is partly discharged from the apertures of the pressure chamber front wall and from the interspace between the combustion chamber and the outer casing through the apertures into the combustion pipe. Another part of the positive gauge pressure is discharged through the blow pipe into the solid fuel discharge pipe in order to cool down the inclined fuel ejection surface in the burner and prevent the hot combustion gases from entering the solid fuel discharge pipe. The counter-pressure required for the invention is achieved when the space between the conveyor screw and conveyor pipe for solid fuel, such as pellets, is full of pellets. In this case, the pellets resist the air flow, preventing the air pressure from being discharged towards the pellet tank.

By means of the invention several new, useful properties are obtained for the operation of the burner. The flow pipe for cold air according to the invention, which can also be called a blow pipe or pressurised pipe, provides cooling of the inclined pellet ejection surface located at the end of the solid fuel discharge pipe so that the fine particles contained in the fuel do not burn and adhere to the hot ejection surface. Pressurisation according to the invention enables an increase in the boiler draft resistance, which also significantly lowers the boiler's no-load power, since the through-flow cooling down the boiler is substantially reduced. The invention enables the use of existing oil-fired boiler equipment also for pellet firing, as the switch to pellet firing does not require the replacement of a viable boiler, which makes the lowers the threshold for changing over to pellet firing. The fan or blow pipe according to the invention can also be retrofitted in similar pellet combustion systems. The system according to the invention is extremely advantageous in terms of overall costs, as it still allows for the use of an oil burner, should this be necessary as a result of pellet price rises or possible availability problems. Thus the use of a burner according to the invention makes the boiler suitable for dual-fuel operation without any structural changes.

In the following, the invention is described by way of examples with reference to the appended drawings, wherein;
- Fig. 1: is a sectional side view of the solid fuel burner according to the invention and the equipment related to it.
- Fig. 2: corresponds to Fig. 1 and shows a second embodiment of the equipment.
- Fig. 3: corresponds to Fig. 1 and shows a third embodiment of the equipment.
- Fig. 4: shows a detail of the equipment of Fig. 2.
- Fig. 5: corresponds to Fig. 1 and shows a fourth embodiment of the equipment.
- Fig. 6: corresponds to Fig. 1 and shows a fifth embodiment of the equipment.
- Fig. 7: shows a detail of the equipment according to a sixth embodiment.
- Fig. 8: corresponds to Fig. 1 and shows a seventh embodiment of the equipment.
- Fig. 9: shows a detail of Fig. 8.
- Fig. 10: corresponds to Fig. 1 and shows a seventh embodiment of the equipment.
- Fig. 11: shows a detail of Fig. 6.

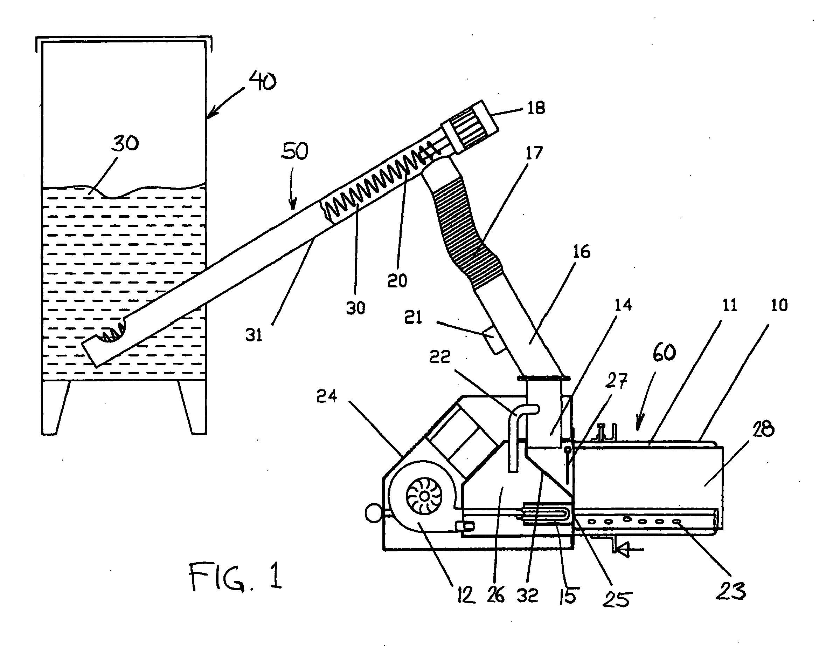

Fig. 1 shows a solid fuel burner 60 according to the invention and the equipment related to it. In the example shown, the burner 60 is a pellet burner and it includes a pellet tank 40 and a conveyor system 50 for pellets 30. From the pellet tank 40, the pellets 30 are conveyed by means of a conveyor screw 20 driven by an electric motor 18 upwards in a conveyor pipe 31 so that the pellets are discharged into a feed channel formed by a fire protection pipe 17, a control pipe 18 and a discharge pipe 14. In the feed channel, the control pipe 18 is provided with a temperature detector 21 which stops the operation of the pellet burner 60 should the feed channel overheat. In the feed channel, the fire protection pipe 17 is another safety device made of a material that melts readily. If the pellets ignite in the feed channel, the fire protection pipe 17 breaks, preventing the fire from spreading into the pellet conveyor system 50 and the pellet tank 40.

In Fig. 1, the pellets are discharged from the feed channel onto the inclined surface 32 and from there onto the bottom of the combustion pipe 11 of the burner 60. A combustion chamber 28 of the pellet burner 60 is formed inside the combustion pipe 11. In front of the inclined surface 32, between the discharge pipe 14 and the combustion chamber 28, there is a plate 27 that is mounted on bearings at its upper edge, slowing down the movement of the falling pellets so that they pile up and burn at a suitable point in the combustion chamber 28.

The fan 12 of the burner 60 creates a positive gauge pressure in the pressure chamber 26, from which a first portion of the combustion air is introduced into the combustion chamber 28 through the apertures 25 located in its front wall and through the apertures 23 located in the casing of the combustion pipe 11. Part of the combustion air also passes through an aperture with an electric resistance element 15 arranged in connection with it, for igniting the pellets.

A second portion of the combustion air is supplied from the pressure chamber 26 through the pipe 22 into the discharge pipe 14 of the pellet feed channel so that the feed channel pressure rises, preventing the hot combustion gases from entering the feed channel. Thanks to this pressure, the pellet burner 60 can be installed, for example, in a conventional pressurised boiler, such as an oil-fired boiler.

The pipe 22 is designed so that it fits inside the protective shell 24 of the burner 60. Thus the protective shell 24 can be readily removed. The pipe 22 is most preferably a metal pipe made of one piece, installed in an airtight sealed aperture of the pressure chamber 26 and connected to the aperture of the discharge pipe 14 using a heat-resistant assembly method, such as welding, for example.

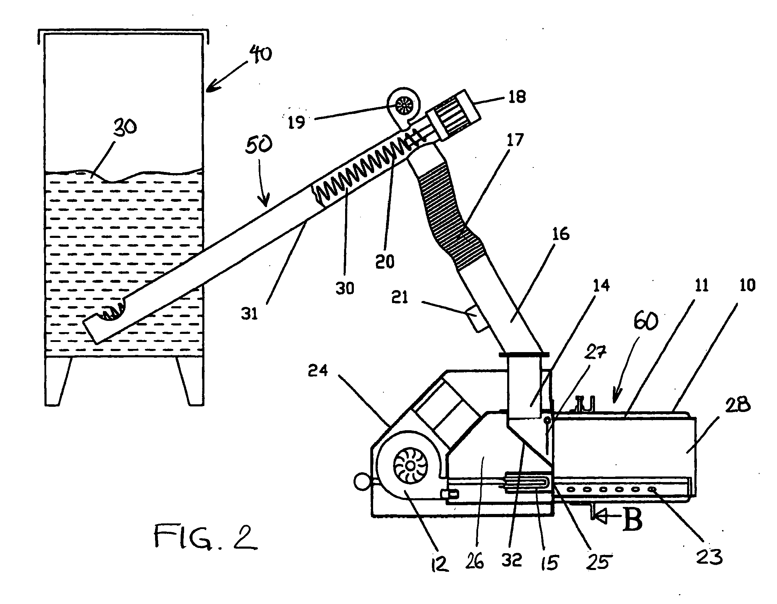

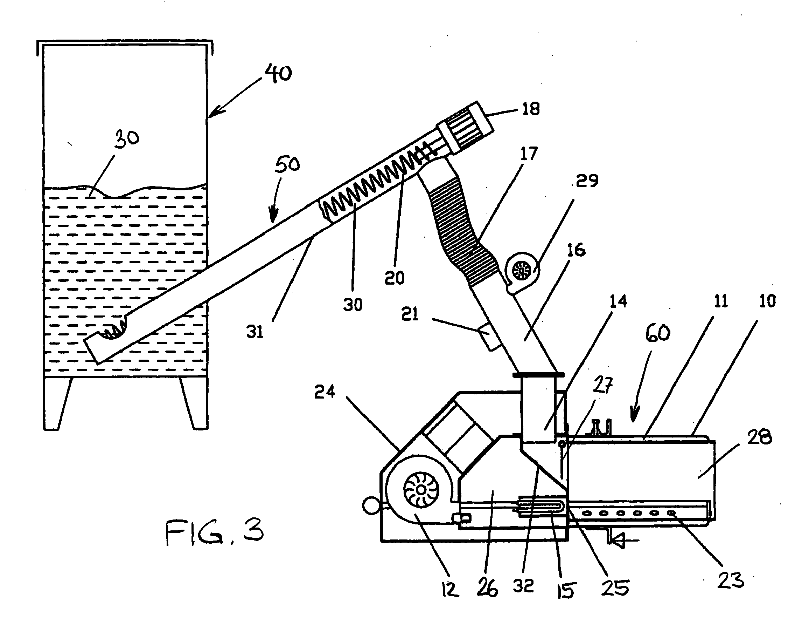

Figs 2 and 3 show a second and third embodiment of the invention, in which the positive gauge pressure in the feed channel is created by means of a separate pressurised fan 19 or 29. In Fig. 2, the fan 19 is located in connection with the conveyor pipe 31, and in Fig. 3, the fan 29 is connected to the control pipe 16. The installation is most preferably done with a shaped adapter sleeve using a reliable technique, such as for example a screw assembly, and the assembly is sealed so as to be airtight. The size, power, assembly method, sealing and location of the pressurised fans 19 and 29 according to the various embodiments of the invention can vary depending on the technique used.

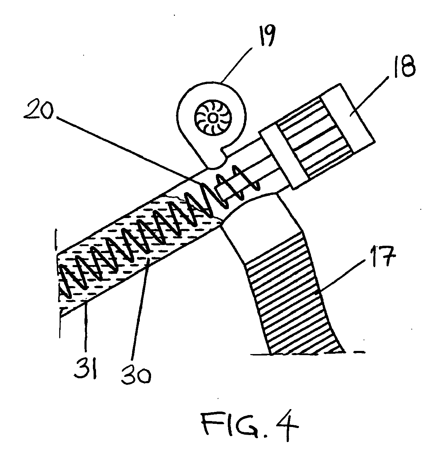

Fig. 4 shows a magnified detail of Fig. 2. The figure shows that the pellet conveyor pipe 31 is full of pellets 30, which the conveyor screw 20 driven by the electric motor 18 has lifted from the pellet tank. As the space between the conveyor screw 20 and the conveyor pipe 31 is full of pellets 30, the pellets resist the air flow, preventing the air pressure from being discharged towards the pellet tank. Hence the positive gauge pressure is discharged through the fire protection pipe 17 of the pellet feed channel towards the pellet burner and, according to the invention, a positive gauge pressure builds up in the feed channel, preventing the hot combustion gases from flowing towards the pellet tank.

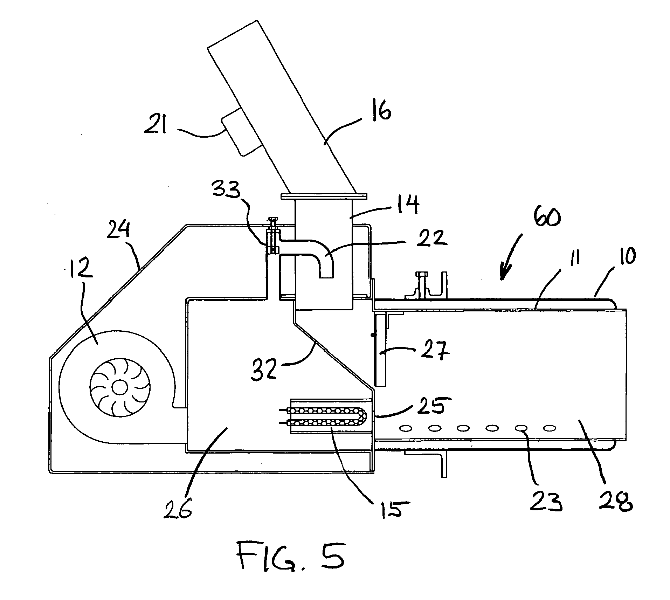

In Fig. 5, the air pipe 22 is arched so that the pressurised air led through it is directed downwards in Fig. 5, i.e. towards the combustion chamber 28 of the burner 60. Hence the air flow functions, at least to a certain extent, as an ejector, effectively preventing the hot combustion gases from flowing towards the pellet feed channel. In Fig. 5, the pipe 22 is also equipped with a manually controlled valve 33, which can be used for controlling the air flow. In this way the proportion of the quantity of combustion air to be supplied through the pellet feed channel to the quantity of combustion air to be supplied directly into the combustion chamber of the burner can be adjusted to the desired value. The adjustment can be made when the burner 60 is being installed or also during combustion. The ejector effect of the transversely downward-bending pipe 22 is exerted on the upper portion of the discharge pipe 14, in which case the cool leakage air from the feed pipework reaches the burner 60 at the same time cooling down the discharge pipe 14 and the inclined ejection surface 32.

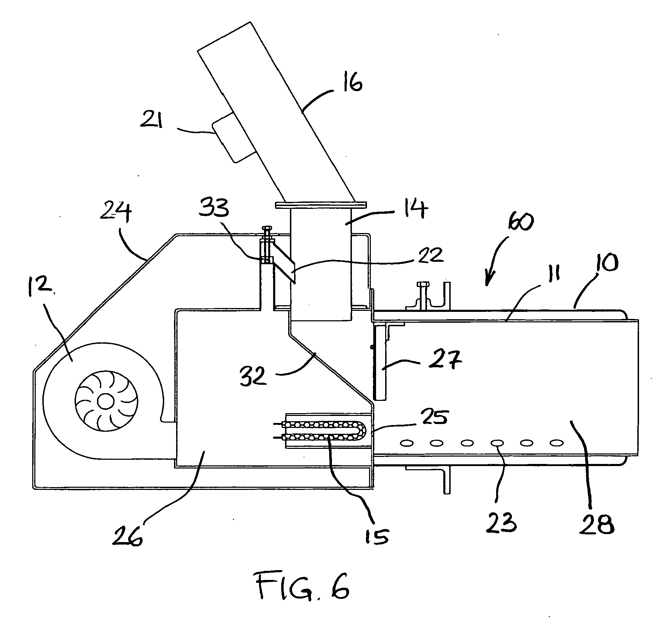

In Fig. 6, the pipe 22 is straight, but it is also directed partly downwards, i.e. towards the combustion chamber 28 of the burner 60, as in Fig. 5. The pipe 22 is also equipped with a manually controlled valve 33. The diagonally descending pipe 22 does not reduce the cross-section of the discharge pipe 14, but the blowing direction is nevertheless downwards. The air quantity is basically controlled by a valve having a piston fastened to a screw for changing the size of the side blowing aperture 22. The screw has a locking nut to ensure that the setting remains unchanged.

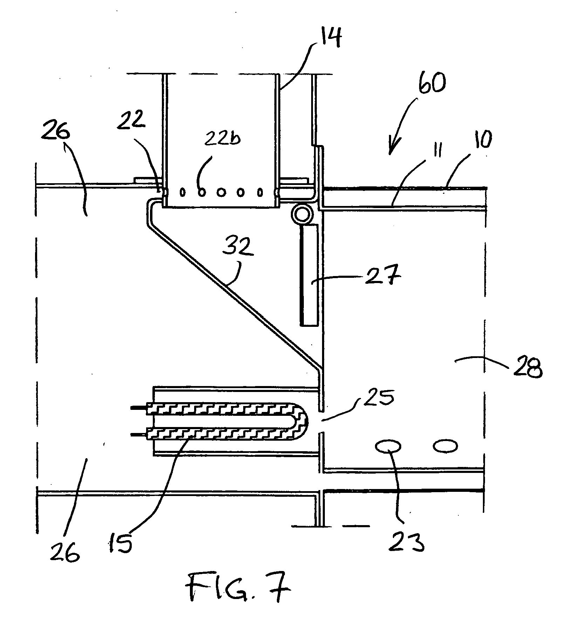

Fig. 7 shows a solution in which part of the combustion air has been supplied from the pressure chamber 26 right to the bottom part of the pellet feed channel, i.e. through the holes 22b located at the lower edge of the discharge pipe 14. The solution has been realised so that the holes are located in the lower part of the discharge pipe between the blowing chamber 26 of the burner 60 and the chamber of the ejection surface 32. The blowing flow directed from the outside inwards centres the dust generated during the conveying of the pellets into the central area of the pipe 14, which means that the method prevents the dust from gathering in the sharp inner corners of the ejection surface 32, which may cause disturbances in the pellet feed. The alignment of the drillings for the holes 22b also strengthens the pellet centring effect in the pipe 14.

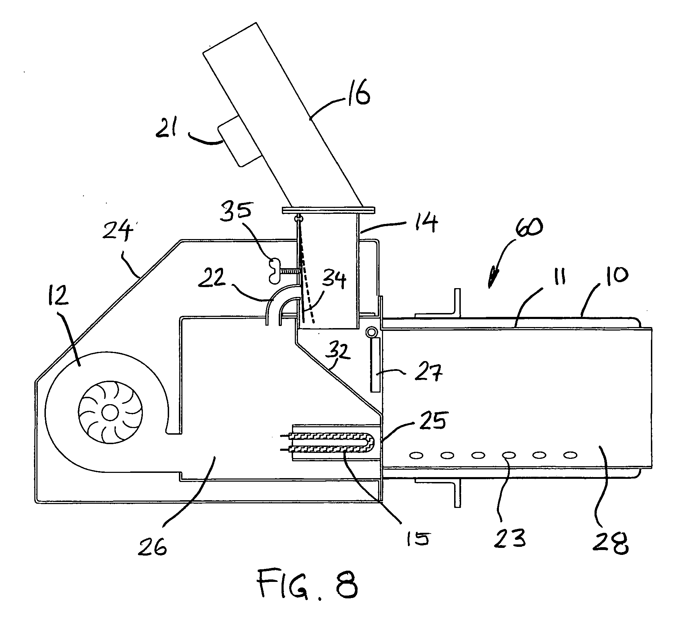

Fig. 8 shows a pellet burner 60, in which the quantity of combustion air to be introduced into the pellet feed channel is controlled automatically. The control device is a bi-metal spring 34 which turns away from in front of the aperture 22 as the temperature rises. Hence the secondary air flow to be fed into the pellet feed channel increases as the temperature rises. The solution has a great impact on maintaining the temperature of the discharge pipe 14 at a sufficiently low level, thereby eliminating any failures of the burner 60 due to overheating. The bi-metal spring 34 adjusts the quantity of secondary air according to the changed exterior pressure conditions, thereby maintaining the temperature of the discharge pipe 14 at a safe level. The operation of a bi-metal fastened with metal rivets is known to be very reliable. An adjusting screw 35 is located in connection with the bi-metal spring 34 for fine-tuning its operation.

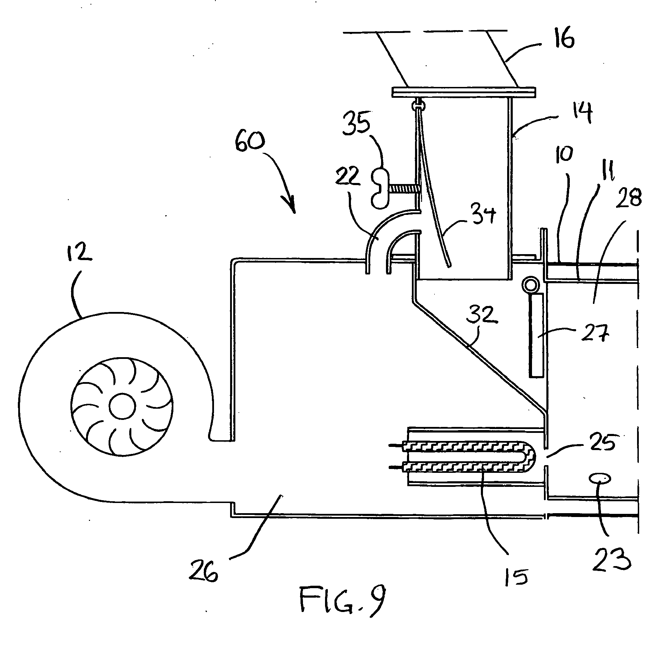

Fig. 9 shows a situation where the temperature has risen in the discharge pipe 14, whereby the bi-metal spring 34 has turned so that the aperture of the pipe 22 has been opened. In this case, more air flows through the pipe 22, at the same time cooling down the channel.

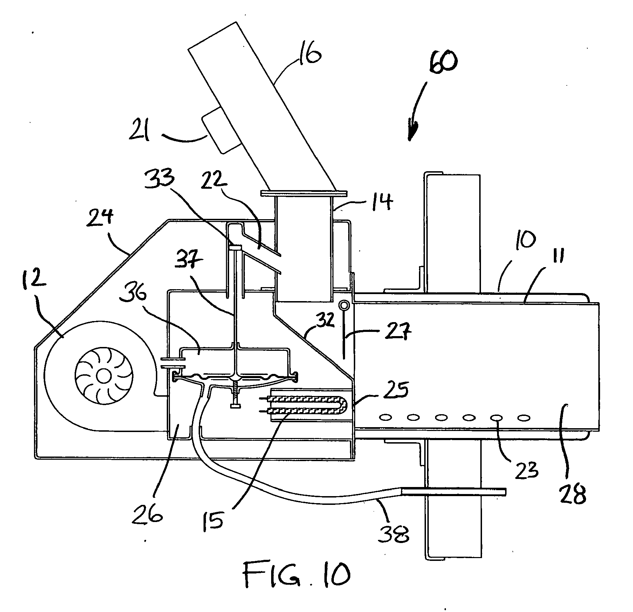

Fig. 10 shows the control of the secondary air quantity with a sensitive pressure detector 36, to which a shut-off valve 33 has been connected through a stem 37. The pipe 38 of the pressure detector 36 is taken into the combustion chamber of the boiler and it detects the pressure variations of the combustion chamber 28 of the combustion pipe 11. This automatically increases the combustion air feed into the discharge pipe, thereby preventing the hot combustion gases from entering the discharge pipe 14.

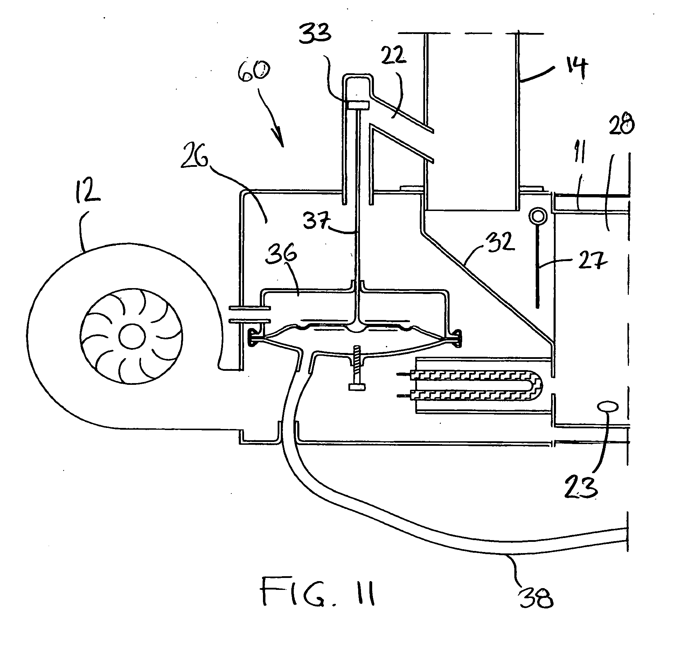

Fig. 11 shows a situation where the pressure detector 36 has opened the valve 33 of the pipe 22.

### LIST OF REFERENCE NUMBERS

- 10: Outer casing
- 11: Combustion pipe
- 12: Fan
- 14: Discharge pipe
- 15: Electric resistance
- 16: Control pipe
- 17: Fire protection pipe
- 18: Electric motor
- 19: Fan
- 20: Conveyor screw
- 21: Temperature detector
- 22: Air pipe
- 23: Aperture
- 24: Protective shell
- 25: Aperture
- 26: Pressure chamber
- 27: Flap
- 28: Combustion pipe combustion chamber
- 29: Fan
- 30: Pellets
- 31: Conveyor pipe
- 32: Inclined surface
- 33: Valve
- 34: Bi-metal spring
- 35: Adjusting screw
- 36: Pressure detector
- 37: Stem
- 38: Pipe
- 40: Pellet tank
- 50: Pellet conveyor system
- 60: Pellet burner

## Claims

1. Method for burning solid fuel, such as pellets, chips or cereals in a burner, the combustion chamber of which is supplied with solid fuel through a feed channel and with the air needed for the combustion through at least one air channel, **characterised in that** a first portion of the air needed for the combustion of the solid fuel is fed directly into the burner's combustion chamber and that a second portion of the air needed for the combustion is fed into the combustion chamber at least partly through the solid fuel feed channel.

2. Method according to claim 1, **characterised in that** a first portion of the air needed for the combustion of the solid fuel is fed directly into the burner's combustion chamber to one or more points and that a second portion of the air needed for the combustion is fed to one or more points in the solid fuel feed channel.

3. Method according to claim 1 or 2, **characterised in that** the combustion air to be supplied through the solid fuel feed channel is fed into the fuel feed channel near the burner's combustion chamber and/or at a distance from the combustion chamber.

4. Method according to claim 1, 2 or 3, **characterised in that** the combustion air is fed into the burner's combustion chamber by means of the burner's own fan in such a way that the air flow of the fan is divided into at least two portions, the first of which is fed directly into the combustion chamber of the burner, and that the second portion is fed through the solid fuel feed channel.

5. Method according to any one of claims 1-4, **characterised in that** the combustion air is fed into the burner's combustion chamber by means of two or more fans in such a way that the air flow from the burner's own fan is fed directly into the burner's combustion chamber and that the air flow of at least one separate fan is fed through the solid fuel feed channel.

6. Method according to any one of claims 1-5, **characterised in that** the proportion of the quantity of combustion air to be supplied through the solid fuel feed channel to the quantity of combustion air to be supplied directly into the combustion chamber of the burner is set at the desired value in advance or during the operation of the burner.

7. Method according to any one of claims 1-6, **characterised in that** the quantity of combustion air to be supplied through the solid fuel feed channel is adjusted according to the temperature of the feed channel so that the air quantity is increased as the feed channel temperature rises.

8. Method according to any one of claims 1-7, **characterised in that** the quantity of combustion air to be supplied through the solid fuel feed channel is adjusted according to the pressure of the boiler combustion chamber or the flue gas duct so that the air quantity is increased as the pressure rises.

9. A burner for solid fuel, such as pellets, chips or cereals, including
- a combustion chamber, such as a combustion pipe,
- a feed channel for feeding solid fuel into the combustion chamber,
- a combustion air supply device, such as a fan, and
- one or several apertures or channels for feeding combustion air from the fan into the combustion chamber,
**characterised in that** the solid fuel burner includes one or several feed channels, through which at least part of the combustion air can be introduced into the combustion chamber through the solid fuel feed channel.

10. Device according to claim 9, **characterised in that** the solid fuel burner includeds one or several combustion air feed channels that open up into the solid fuel feed channel near the burner combustion chamber and/or at a distance from the combustion chamber.

11. Device according to claim 9 or 10, **characterised in that** the solid fuel burner includes
- the burner's own fan,
- one or more feed channels for blowing combustion air from the burner's own fan into the burner's combustion chamber and
- one or several feed channels for blowing combustion air from the burner's own fan into the solid fuel feed channel.

12. Device according to claim 9, 10 or 11, **characterised in that** the solid fuel burner includes
- the burner's own fan,
- one or more feed channels for blowing combustion air from the burner's own fan into the burner's combustion chamber,
- one or more additional fans,
- feed channels connected to one or more additional fans for blowing combustion air from the additional fan into the solid fuel feed channel.

13. Device according to any one of claims 9-12, **characterised in that** the proportion of the quantity of combustion air to be supplied through the solid fuel feed channel to the quantity of combustion air to be supplied directly into the combustion chamber of the burner is less than 50%, most preferably 5-20%.

14. Device according to any one of claims 9-13, **characterised in that** the proportion of the quantity of combustion air to be supplied through the solid fuel feed channel to the quantity of combustion air to be supplied directly into the combustion chamber of the burner is around 10%.

15. Device according to any one of claims 9-14, **characterised in that** a control device, such as a valve, is provided in connection with the combustion air feed channel leading to the solid fuel feed channel, which control device controls the proportion of the quantity of combustion air to be supplied through the solid fuel feed channel to the quantity of combustion air to be supplied directly into the burner combustion chamber.

16. Device according to any one of claims 9-15, **characterised in that** the solid fuel burner includes a temperature detector that controls the quantity of combustion air to be supplied through the solid fuel feed channel according to the temperature of the solid fuel feed channel.

17. Device according to any one of claims 9-16, **characterised in that** the solid fuel burner includes an air pressure detector that controls the quantity of combustion air to be supplied through the solid fuel feed channel according to the pressure of the combustion chamber of the boiler or the flue gas duct.
